# EUROPÄISCHE PATENTSCHRIFT

(11) **EP 4 143 074 B1**
(45) Veröffentlichungstag und Bekanntmachung des Hinweises auf die Patenterteilung: **11.06.2025**
(21) Anmeldenummer: 21721406.3
(22) Anmeldetag: 12.04.2021
(51) Int. Cl.: B62D 15/02, B60Q 1/48, G01B 15/00

(54) **VERFAHREN ZUM BETRIEB EINES KRAFTFAHRZEUGS UND KRAFTFAHRZEUG**
METHOD FOR OPERATING A MOTOR VEHICLE, AND MOTOR VEHICLE
PROCÉDÉ DE FONCTIONNEMENT D'UN VÉHICULE AUTOMOBILE, ET VÉHICULE AUTOMOBILE

(30) Priorität: 28.04.2020 DE 102020111476
(43) Veröffentlichungstag der Anmeldung: 08.03.2023
(73) Patentinhaber: Audi AG, 85045 Ingolstadt (DE)
(72) Erfinder: KRETSCHMANN, Philipp, 85077 Manching (DE); RESCHKE, Johannes, 84085 Langquaid (DE); BIRKNER, Markus, 93049 Regensburg (DE); MAIER, Georg, 85125 Kinding-Haunstetten (DE)
(86) Internationale Anmeldenummer: PCT/EP2021/059367
(87) Internationale Veröffentlichungsnummer: WO 2021/219350

(56) Entgegenhaltungen:
- DE-A1- 102013 213 754
- DE-A1- 102015 208 124
- DE-A1- 102017 217 784
- DE-B3- 102017 200 670
- US-A1- 2019 202 443

## Beschreibung

Die Erfindung betrifft ein Verfahren zum Betrieb eines Kraftfahrzeugs, wobei das Kraftfahrzeug zur Durchführung wenigstens eines fahrerlos durchführbaren Fahrmanövers ausgebildet ist. Weiterhin betrifft die Erfindung ein Kraftfahrzeug.

Es sind verschiedene Funktionen von Kraftfahrzeugen bekannt, bei denen das Kraftfahrzeug ein oder mehrere Fahrmanöver fahrerlos durchführen kann. Dabei kann es sich beispielsweise um Einparkvorgänge handeln, bei denen das Fahrzeug selbständig in einen freien Parkplatz oder eine freie Parklücke einparkt. Der Automatisierungsgrad des Fahrmanövers kann dabei derart hoch sein, dass eine Anwesenheit des Fahrers im Kraftfahrzeug nicht erforderlich ist, da das Fahrmanöver von dem Kraftfahrzeug selbständig und gegebenenfalls auch ohne Überwachung durch den Fahrer erfolgen kann (SAE-Level 4). Aus dem Stand der Technik sind diesbezüglich verschiedene Verfahren bekannt.

In DE 10 2013 104 859 A1 wird ein System zum Einparken eines Kraftfahrzeugs in eine Parklücke beschrieben, wobei durch Aktivierung einer innerhalb des Kraftfahrzeugs angeordneten Elektronikeinheit eine mögliche Parklücke gesucht wird. Über ein außen am Kraftfahrzeug angeordnetes Kommunikationsfeld kann das Kraftfahrzeug anschließend von einem Benutzer aktiviert werden, so dass ein fahrerloses Einparken des Kraftfahrzeugs erfolgt.

DE 10 2016 202 976 A1 beschreibt eine Vorrichtung zum automatisierten Parken eines Kraftfahrzeugs, welches eine Umfeldsensorik und eine Steuereinheit zum Durchführen eines automatisierten Parkvorgangs aufweist. Das Auslösen des automatisierten Parkvorgangs erfolgt dabei über eine Bedieneinheit, welche als Sensorik eines schlüssellosen Zugangssystems des Kraftfahrzeugs ausgebildet ist.

In JP 2018065488 A wird ein Kraftfahrzeug beschrieben, welches einen automatisierten Einparkvorgang durchführen kann. Der automatisierte Einparkvorgang wird dabei durch ein Abschließen des Kraftfahrzeugs gestartet, wobei die verbleibende Zeit bis zur Durchführung des Parkvorgangs nach Abschließen des Kraftfahrzeugs mittels eines durch Blinken einer im Inneren oder am Äußeren des Kraftfahrzeugs angeordneten Anzeigevorrichtung dargestellten Zeitintervalls erfolgt.

Bei derartig automatisierten Fahrvorgängen, welche insbesondere ohne Anwesenheit eines Fahrers im Kraftfahrzeug durchgeführt werden können, ist es wünschenswert, dass eine möglichst intuitive Bedienung durch einen sich außerhalb des Kraftfahrzeugs befindenden Fahrer bzw. Benutzer des Kraftfahrzeugs erfolgen kann. Dies setzt voraus, dass der Fahrer bzw. Benutzer für die Bedienung notwendige Informationen auch außerhalb des Kraftfahrzeugs möglichst einfach erfassen kann.

In US 2019/0202443 A1 wird ein Verfahren zum autonomen Parken eines Kraftfahrzeugs beschrieben, bei dem die Position eines zum Steuern des Einparkvorgangs verwendeten Mobilgeräts ermittelt wird. Dabei wird der autonome Parkvorgang nur durchgeführt, wenn sich das Mobilgerät beziehungsweise ein Benutzer innerhalb einer vorgegebenen Entfernung um das Kraftfahrzeug befindet. Um dem Benutzer das Einhalten des Abstands kenntlich zu machen, werden die Fahrzeugbeleuchtung oder ein projiziertes Bild geändert, z. B. wenn sich die Person mit dem Mobilgerät zu weit von dem Kraftfahrzeug entfernt hat. US 2019/202443 A1 zeigt insbesondere ein Verfahren zum Betrieb eines Kraftfahrzeugs, wobei das Kraftfahrzeug zur Durchführung wenigstens eines fahrerlos durchführbaren Fahrmanövers ausgebildet ist, wobei vor Durchführung des Fahrmanövers durch eine Recheneinrichtung des Kraftfahrzeugs
- eine Erfüllung wenigstens einer Zulässigkeitsvoraussetzung zur Durchführung des Fahrmanövers überprüft wird,
- eine Vornahme oder ein bisheriges Ausbleiben wenigstens einer zum Starten der Durchführung des Fahrmanövers erforderlichen Bedienhandlung eines sich außerhalb des Kraftfahrzeugs befindlichen Benutzers des Kraftfahrzeugs erfasst wird, wobei die Vornahme der Bedienhandlung durch eine mit der Recheneinrichtung verbundene Überwachungseinrichtung und/oder anhand einer Übermittlung einer die Vornahme der Bedienhandlung beschreibenden Information an eine mit der Recheneinrichtung verbundene Kommunikationseinrichtung des Kraftfahrzeugs erfassbar ist.

Der Erfindung liegt daher die Aufgabe zugrunde, ein Verfahren zum Betrieb eines zur Durchführung wenigstens eines fahrerlos durchführbaren Fahrmanövers ausgebildeten Kraftfahrzeugs anzugeben, welches eine verbesserte, insbesondere eine nachvollziehbarere und/oder intuitivere, Bedienbarkeit des Kraftfahrzeugs ermöglicht.

Zur Lösung dieser Aufgabe ist beim Kraftfahrzeug der eingangs genannten Art erfindungsgemäß vorgesehen, dass vor Durchführung des Fahrmanövers durch eine Recheneinrichtung des Kraftfahrzeugs
- eine Erfüllung wenigstens einer Zulässigkeitsvoraussetzung zur Durchführung des Fahrmanövers überprüft wird,
- eine Vornahme oder ein bisheriges Ausbleiben wenigstens einer zum Starten der Durchführung des Fahrmanövers erforderlichen Bedienhandlung eines sich außerhalb des Kraftfahrzeugs befindlichen Benutzers des Kraftfahrzeugs erfasst wird, wobei die Vornahme der Bedienhandlung durch eine mit der Recheneinrichtung verbundene Überwachungseinrichtung und/oder anhand einer Übermittlung einer die Vornehme der Bedienhandlung beschreibenden Information an eine mit der Recheneinrichtung verbundene Kommunikationseinrichtung des Kraftfahrzeugs erfassbar ist,
- in Abhängigkeit der Erfüllung oder der Nichterfüllung der Zulässigkeitsvoraussetzung und in Abhängigkeit der bereits erfolgten Vornahme oder des bisherigen Ausbleibens der Bedienhandlung ein Zustand aus einer Gruppe von möglichen Zuständen bestimmt wird, und
- wenigstens eine Signaleinrichtung des Kraftfahrzeugs zum Erzeugen eines dem bestimmten Zustand zugeordneten Signals aus einer Gruppe von unterscheidbaren, außerhalb des Kraftfahrzeugs wahrnehmbaren und jeweils einem der möglichen Zustände zugeordneten Signalen angesteuert wird.

Das erfindungsgemäße Verfahren ermöglicht vorteilhaft, dass der sich außerhalb des Kraftfahrzeugs befindliche Benutzer des Kraftfahrzeugs vor Durchführung des fahrerlosen Fahrmanövers den Zustand, in dem sich das Kraftfahrzeug aktuell befindet, aufgrund des dem Zustand zugeordneten Signals erkennen kann. Dies ermöglicht es vorteilhaft, durch das Signal dem Benutzer kenntlich zu machen, ob die wenigstens eine Zulässigkeitsvoraussetzung für die Durchführung des Fahrmanövers erfüllt ist und/oder ob eine oder mehrere Zulässigkeitsvoraussetzungen nicht oder noch nicht erfüllt sind. Ferner kann dem Benutzer angezeigt werden, ob die wenigstens eine zum Starten der Durchführung des Fahrmanövers erforderliche Bedienhandlung bereits vorgenommen worden ist oder ob auf die Vornahme der Bedienhandlung zum Starten der Durchführung des Fahrmanövers noch gewartet wird.

Bei dem Fahrmanöver kann es sich insbesondere um ein ohne einen Eingriff eines Fahrers bzw. des Benutzers durchführbares Fahrmanöver handeln. Insbesondere kann das Kraftfahrzeug auch derart ausgebildet sein, dass es das Fahrmanöver ohne eines Bereithaltens des Fahrers bzw. des Benutzers zu einem Eingriff durchführen kann. Das Kraftfahrzeug kann beispielsweise eine Umfeldsensorik umfassen, welche mit der Recheneinrichtung verbunden ist, wobei die Recheneinrichtung zur Durchführung des Fahrmanövers ausgebildet ist. Bei dem Fahrmanöver kann es sich beispielsweise um einen Einparkvorgang handeln.

Die Vornahme der Bedienhandlung durch den Benutzer kann dabei durch eine mit der Recheneinrichtung verbundene Überwachungseinrichtung und/oder anhand einer Übermittlung einer die Vornahme der Bedienhandlung durch den Benutzer beschreibenden Information an eine mit der Recheneinrichtung verbundene Kommunikationseinrichtung des Kraftfahrzeugs erfasst werden. Die Vornahme der Bedienhandlung kann dann von der Überwachungseinheit bzw. der Kommunikationseinrichtung an die Recheneinrichtung übermittelt werden. Entsprechend kann das Ausbleiben der Bedienhandlung dadurch erfasst werden, dass die mit der Recheneinrichtung verbundene Überwachungseinrichtung bisher keine Vornahme der Bedienhandlung erfasst hat und/oder dass bisher keine die Durchführung der Bedienhandlung beschreibende Information an die mit der Recheneinrichtung verbundene Kommunikationseinrichtung gesendet wurde bzw. dass bisher keine Übermittlung der Vornahme der Bedienhandlung von der Überwachungseinrichtung und/oder der Kommunikationseinrichtung an die Recheneinrichtung erfolgt ist. Bei der zum Starten der Durchführung des Fahrmanövers erforderlichen Bedienhandlung kann es sich um einen Aktivierungstrigger für die Durchführung des fahrerlosen Fahrmanövers handeln.

Durch die Recheneinrichtung des Kraftfahrzeugs wird es ermöglicht, abhängig des sich jeweils aus der Erfüllung und/oder Nichterfüllung einer oder mehrerer Zulässigkeitsvoraussetzungen beziehungsweise der Vornahme und/oder dem Ausbleiben einer oder mehrerer Bedienhandlungen des Benutzers ergebenden aktuellen Zustands aus einer Gruppe von mehreren möglichen Zuständen ein dem aktuellen Zustand zugeordnetes Signal über eine Ansteuerung einer Signaleinrichtung des Kraftfahrzeugs durch die Recheneinrichtung zu erzeugen. Das über die Signaleinrichtung des Kraftfahrzeugs erzeugte Signal ist dabei außerhalb des Kraftfahrzeugs wahrnehmbar, so dass durch das Signal der außerhalb des Kraftfahrzeugs befindliche Benutzer Kenntnis über den aktuellen Zustand des Kraftfahrzeugs erlangen kann. Dabei werden unterschiedlichen möglichen Zuständen unterschiedliche Signale eine Gruppe von mehreren, unterschiedlichen Signalen zugeordnet, so dass der Benutzer den jeweils aktuellen Zustand des Kraftfahrzeugs intuitiv erkennen kann. Dies ermöglicht es dem sich außerhalb des Kraftfahrzeugs befindlichen Benutzer des Kraftfahrzeugs intuitiv zu erfassen, ob beispielsweise noch die Vornahme der wenigstens einen Bedienhandlung zum Starten der Durchführung des Fahrmanövers erforderlich ist oder ob beispielsweise ein Fehlerzustand vorliegt, indem eine Durchführung des Fahrmanövers nicht möglich ist bzw. ob alle erforderlichen Schritte zum Starten der Durchführung des Fahrmanövers durchgeführt wurden.

Vorteilhaft können dabei mehrere verschiedene Zustände unterschieden werden. Zum einen kann ein Zustand, in dem beispielsweise die wenigstens eine Zulässigkeitsvoraussetzung erfüllt ist, jedoch vom Benutzer die zum Starten der Durchführung des Fahrmanövers erforderliche Bedienhandlung noch nicht vorgenommen wurde, durch ein nur diesem Zustand zugeordnetes Signal kenntlich gemacht werden. Aufgrund der Kenntlichmachung dieses Zustands kann der Fahrer folglich erkennen, dass zum Starten des Fahrmanövers noch die Vornahme der Bedienhandlung erforderlich ist, die wenigstens eine Zulässigkeitsvoraussetzung zur Durchführung des Fahrmanövers jedoch erfüllt ist.

Ein weiter möglicher Zustand kann vorliegen, wenn beispielsweise wenigstens eine Zulässigkeitsvoraussetzung zur Durchführung des Fahrmanövers nicht erfüllt ist, wobei der Benutzer durch die Kenntlichmachung dieses Zustands durch das dem Zustand zugeordnete Signal erkennen kann, dass die Vornahme der wenigstens einen Bedienhandlung zum Starten der Durchführung des Fahrmanövers in diesem Zustand nicht zu einem Start der Durchführung des Fahrmanövers führen wird. Dabei ist es möglich, dass zwischen der Erfüllung unterschiedlicher Zulässigkeitsvoraussetzungen unterschieden wird, so dass unterschiedliche nicht erfüllte Zulässigkeitsvoraussetzungen jeweils einen anderen Zustand bedingen und/oder dass die Nichterfüllung wenigstens einer von mehreren Zulässigkeitsvoraussetzungen in einem Zustand zusammengefasst werden.

Ein weiterer möglicher Zustand, welcher unterschieden werden kann, kann vorliegen, wenn die wenigstens eine Zulässigkeitsvoraussetzung erfolgt ist und die Bedienhandlung zum Starten der Durchführung des Fahrmanövers vom Benutzer vorgenommen und der Recheneinrichtung auch als vorgenommen übermittelt wurde. Dadurch kann der Benutzer erkennen, dass alle im Vorfeld der Durchführung des Fahrmanövers erforderlichen Bedienhandlungen erfolgreich vorgenommen worden sind und dass keine nicht erfüllten Zulässigkeitsvoraussetzungen vorliegen. Dies ermöglicht es, dass der Benutzer erkennen kann, dass das Kraftfahrzeug nun mit der Durchführung des Fahrmanövers beginnen wird, so dass der Benutzer von einem Beginn der Durchführung des Fahrmanövers ausgehen kann und sich beruhigt vom Kraftfahrzeug entfernen kann ohne auf den gegebenenfalls zeitverzögert nach Vornahme der Bedienhandlung erfolgenden Start der Durchführung des Fahrmanövers warten zu müssen.

Der Benutzer kann somit außerhalb des Kraftfahrzeugs über das dem jeweils aktuellen Zustand zugeordnete, unterscheidbare Signal erkennen, in welchem Zustand sich das Kraftfahrzeug aktuell befindet beziehungsweise ob und gegebenenfalls wie er das Kraftfahrzeug durch die Vornahme der wenigstens einen Bedienhandlung steuern kann. Dies ermöglicht vorteilhaft eine intuitive und vereinfachte Bedienung des Kraftfahrzeugs bei der Durchführung des fahrerlos durchführbaren Fahrmanövers.

In einer bevorzugten Ausgestaltung der Erfindung kann vorgesehen sein, dass als Signaleinrichtung wenigstens eine Fahrzeugleuchte, insbesondere ein Scheinwerfer und/oder wenigstens eine Signalleuchte, insbesondere eine Blinkerleuchte, ein Tagfahrlicht und/oder ein Bremslicht, verwendet wird. Insbesondere ist es möglich, dass eine Kombination aus mehreren Scheinwerfern und/oder mehreren Signalleuchten verwendet wird, so dass das über die Signaleinrichtung erzeugte Signal von jeder Position im Umfeld des Kraftfahrzeugs vom Benutzer wahrgenommen werden kann.

Die Verwendung wenigstens einer außen am Kraftfahrzeug angeordneten Fahrzeugleuchte als Signaleinrichtung hat dabei den Vorteil, dass diese zumindest teilweise ohnehin ein Bestandteil eines Kraftfahrzeugs sein müssen und somit auf eine zusätzlich vorzusehende Signaleinrichtung vorteilhaft verzichtet werden kann. Weiterhin können mit wenigstens einem Scheinwerfer oder wenigstens einer Signalleuchte jeweils eine Gruppe von unterschiedlichen optischen Signalen erzeugt werden, welche von dem Benutzer des Kraftfahrzeugs gut wahrgenommen und leicht unterschieden werden können.

Erfindungsgemäß kann vorgesehen sein, dass zumindest ein Teil der Signale der Gruppe von Signalen jeweils eine unterschiedliche Farbe und/oder eine unterschiedliche Blinkfrequenz und/oder ein unterschiedliches Betriebsmuster der wenigstens einen Fahrzeugleuchte umfassen. Verschiedenen Zuständen des Kraftfahrzeugs können dabei verschiedene optische Signale zugeordnet werden, welche sich zumindest teilweise durch eine mittels der wenigstens einen Fahrzeugleuchte erzeugten Lichtfarbe unterscheiden können. Zusätzlich oder alternativ dazu sind auch eine unterschiedliche Blinkfrequenz der wenigstens einen Fahrzeugleuchte und/oder ein unterschiedliches Betriebsmuster der wenigstens einen Fahrzeugleuchte möglich.

Ein Betriebsmuster kann dabei beispielsweise eine Ansteuerung der wenigstens einen Fahrzeugleuchte darstellen, welche sich von einem angeschalteten und einem ausgeschalteten Zustand sowie von einem direkten Wechsel zwischen dem eingeschalteten und dem ausgeschalten Zustand, also einem Blinken, unterscheidet. Ein Betriebsmuster kann beispielsweise ein Pulsieren der Fahrzeugleuchte, also ein kontinuierliches Ändern der Helligkeit des erzeugten Signals, umfassen. Verschiedene Betriebsmuster können sich dabei beispielsweise in einer Frequenz des Pulsierens unterscheiden, so dass diese Signale durch ihr schnelleres beziehungsweise langsameres Pulsieren von dem Benutzer erkannt und unterschieden werden können.

Erfindungsgemäß kann vorgesehen sein, dass eine zur akustischen Signalgabe ausgebildete Signaleinrichtung verwendet wird, wobei zumindest ein Teil der Signale der Gruppe von Signalen jeweils eine unterschiedliche Tonhöhe, einen unterschiedlichen Klang und/oder eine unterschiedliche zeitliche Abfolge von Tönen und/oder Klängen umfassen. Dies ermöglicht es, dass die den unterschiedlichen Zuständen zugeordneten Signale zumindest teilweise auch akustisch voneinander unterschieden werden können. Insbesondere ist es möglich, dass ein oder mehrere der Signale sowohl eine optische Signalkomponente als auch eine akustische Signalkomponente umfassen. Die zur akustischen Signalgabe ausgebildeten Signaleinrichtung erzeugt die akustischen Signale bzw. Signalkomponenten dabei insbesondere derart, dass sie in einem Umfeld des Kraftfahrzeugs von dem Benutzer wahrgenommen werden können.

Erfindungsgemäß kann vorgesehen sein, dass die Bedienhandlung des Benutzers eine am Kraftfahrzeug und/oder in einem Umfeld des Kraftfahrzeugs und/oder an einem über eine Kommunikationsverbindung mit der Kommunikationseinrichtung des Kraftfahrzeugs verbundenen Gerät durchzuführende Bedienhandlung ist. Die Durchführung der Bedienhandlung des Benutzers am Kraftfahrzeug kann durch die mit der Recheneinrichtung verbundene Überwachungseinrichtung erfasst werden. Es ist auch möglich, dass die Durchführung der Bedienhandlung am Kraftfahrzeug von einer weiteren Steuereinheit des Kraftfahrzeugs erfasst wird, wobei eine die Durchführung der Bedienhandlung beschreibende Information an die mit der Recheneinrichtung verbundene Kommunikationseinrichtung übermittelt wird, welche der Recheneinrichtung die Durchführung der Bedienhandlung mitteilt. Zusätzlich oder alternativ dazu ist es möglich, dass die Bedienhandlung an dem über eine Kommunikationsverbindung mit der Kommunikationseinrichtung des Kraftfahrzeugs verbundenen Gerät durchgeführt wird, wodurch ermöglicht wird, dass sich der Benutzer des Kraftfahrzeugs zur Durchführung der Bedienhandlung nicht in direktem Kontakt zu dem Kraftfahrzeug befinden muss. Bei dem Gerät kann es sich um ein Mobilgerät, insbesondere ein Smartphone mit einer entsprechenden App, oder um einen Fahrzeugschlüssel handeln.

Erfindungsgemäß kann vorgesehen sein, dass die Bedienhandlung die Aktivierung einer Fahrzeugverriegelung an einem Fahrzeugschlüssel oder einem Mobilgerät ist oder umfasst und/oder dass die Bedienhandlung ein Entfernen des Benutzers aus einem Umfeld des Kraftahrzeugs ist oder umfasst. Dies ermöglicht es vorteilhaft, eine bereits bekannte Bedienhandlung zum Starten der Durchführung des Fahrmanövers zu verwenden. Eine Verriegelung des Fahrzeugs kann dabei über den Fahrzeugschlüssel beispielsweise direkt am Kraftahrzeug durch ein Einführen des Fahrzeugschlüssels in einen Schließzylinder des Kraftfahrzeugs erfolgen oder drahtlos durch Aktivierung beispielsweise eines Tasters am Fahrzeugschlüssel über eine Kommunikationsverbindung zu der Kommunikationseinrichtung des Kraftfahrzeug ausgelöst werden. Auch eine Aktivierung einer Fahrzeugverriegelung durch ein Entfernen des Benutzers aus einem Umfeld des Kraftfahrzeugs ist möglich, wobei das Entfernen des Benutzers aus dem Umfeld des Kraftfahrzeugs beispielsweise durch die Überwachungseinrichtung des Kraftfahrzeugs erfasst werden kann.

In einer bevorzugten Ausgestaltung der Erfindung kann vorgesehen sein, dass bei Ausbleiben der Bedienhandlung über wenigstens eine in der Recheneinrichtung hinterlegte Zeitschwelle hinaus das dem aktuellen Zustand zugeordnete Signal unterscheidbar verändert wird. Dies ermöglicht es, verschiedene Situationen zu unterscheiden, in denen beispielsweise die wenigstens eine Zulässigkeitsvoraussetzung erfüllt ist, jedoch die Vornahme der Bedienhandlung noch ausgeblieben ist. Durch das unterscheidbare Verändern des Signals nach Ablauf einer in der Recheneinrichtung hinterlegten Zeitschwelle wird es ermöglicht, den Benutzer des Kraftfahrzeugs daran zu erinnern, dass zum Starten der Durchführung des Fahrmanövers noch die Vornahme der wenigstens einen Bedienhandlung erforderlich ist. Insbesondere bei Verwendung der Aktivierung eines Verriegelungssystems als Aktivierungstrigger für das fahrerlose Fahrmanöver kann so vermieden werden, dass sich der Benutzer von einem nicht verriegelten Fahrzeug entfernt.

Eine unterscheidbare Veränderung des Signals kann dabei beispielsweise durch eine Erhöhung einer Blinkfrequenz wenigstens einer Fahrzeugleuchte bei Überschreiten der Zeitschwelle erfolgen. Es ist auch möglich, dass mehrere Zeitschwellen hinterlegt sind, wobei beim Überschreiten der jeweils fortlaufenden Zeitschwellen das dem aktuellen Zustand zugeordnete Signal jeweils fortlaufend unterscheidbar verändert wird. Beispielsweise kann dies durch eine fortlaufende Erhöhung der Blinkfrequenz beim Überschreiten der jeweils zeitversetzten Zeitschwellen erfolgen, so dass bei zunehmender Zeit, in der die Vornahme der Bedienhandlung noch aussteht, durch verschiedene Eskalationsstufen einer Blinkfrequenz der Benutzer auf die noch nicht erfolgte Vornahme der Bedienhandlung hingewiesen werden kann.

Neben einer erfolgten Änderung bzw. Eskalation der Blinkfrequenz können natürlich auch weitere Signaleigenschaften wie eine Farbe, eine Helligkeit oder Ähnliches eines optischen Signals beziehungsweise eine Tonhöhe oder ein Klang eines akustischen Signals oder einer akustischen Signalkomponente verändert werden. Auch das Hinzunehmen einer akustischen Signalkomponente zu einem bisher nur optisch dargestellten Signal ist möglich, so dass vorteilhaft eine Dringlichkeit der Vornahme der Bedienhandlung des Benutzers kenntlich gemacht werden kann.

Erfindungsgemäß kann vorgesehen sein, dass als Zulässigkeitsvoraussetzung eine kraftfahrzeuginterne Zulässigkeitsvoraussetzung und/oder eine kraftfahrzeugexterne Zulässigkeitsvoraussetzung, insbesondere durch Kommunikation mit einer Infrastruktur, überprüft wird. Eine kraftfahrzeuginterne Zulässigkeitsvoraussetzung kann dabei beispielsweise eine Betriebsbereitschaft einer für die Durchführung des fahrerlosen Fahrmanövers verwendeten Sensoreinrichtung, beispielsweise einer zur Durchführung des Fahrmanövers verwendeten Umfeldsensorik des Kraftfahrzeugs, sein. Es ist auch möglich, dass eine Zulässigkeitsvoraussetzung vorsieht, dass zu ihrer Erfüllung alle Kraftfahrzeugtüren und Kraftfahrzeugklappen geschlossen sein müssen. Eine Zulässigkeitsvoraussetzung kann auch vorsehen, dass zu ihrer Erfüllung beispielsweise eine Zielauswahl eines Ziels des fahrerlos durchführbaren Fahrmanövers durch den Benutzer erfolgt sein muss.

Als kraftfahrzeugexterne Zulässigkeitsvoraussetzung kann beispielsweise durch Kommunikation mit einer Infrastruktur überprüft werden, ob in der Umgebung des Kraftfahrzeugs ein freier Parkplatz vorhanden ist, in den das Kraftfahrzeug bei Durchführung des fahrerlosen Fahrmanövers einparken kann. Es ist möglich, dass jeder überprüften Zulässigkeitsvoraussetzung ein eigener Zustand zugeordnet wird, welcher jeweils durch ein unterscheidbares Signal vom Benutzer erkannt werden kann. Es ist auch möglich, dass mehreren, unterschiedlichen Zulässigkeitsvoraussetzungen jeweils ein gemeinsamer Zustand zugeordnet wird. Dies ermöglicht beispielsweise, dem Benutzer kenntlich zu machen, dass eine Zulässigkeitsvoraussetzung aus einer Gruppe von Zulässigkeitsvoraussetzungen, welche für den jeweiligen Zustand zusammengefasst sind, nicht erfüllt sind. Dies kann beispielsweise bei Zulässigkeitsvoraussetzungen der Fall sein, welche bei einem technischen Defekt des Kraftfahrzeugs, beispielsweise einem Defekt einer von mehreren zur Durchführung des Fahrmanövers verwendeten Sensoreinrichtungen, nicht erfüllt sind.

Erfindungsgemäß kann vorgesehen sein, dass bei Nichterfüllung der wenigstens einen Zulässigkeitsvoraussetzung eine die Zulässigkeitsvoraussetzung betreffende Information an einer Anzeigeeinrichtung des Kraftfahrzeugs angezeigt und/oder an ein über eine Kommunikationsverbindung mit der Kommunikationseinrichtung des Kraftfahrzeugs verbundenes Gerät übermittelt wird. Dieses Gerät kann insbesondere dasselbe Gerät sein, an dem die wenigstens eine Bedienhandlung vorgenommen werden soll. Die die Nichterfüllung der Zulässigkeitsvoraussetzung betreffende Information kann insbesondere eine Anweisung enthalten, wie die Zulässigkeitsvoraussetzung erfüllt werden kann.

Beispielsweise kann bei einer Zulässigkeitsvoraussetzung, welche für ihre Erfüllung voraussetzt, dass alle Fahrzeugtüren beziehungsweise Fahrzeugklappen geschlossen sind, dem Benutzer mitgeteilt werden, dass bei Nichterfüllung dieser Zulässigkeitsvoraussetzung eine Fahrzeugtür oder Fahrzeugklappe, insbesondere welche Fahrzeugtür oder Fahrzeugklappe, vom Benutzer zum Erfüllen der Zulässigkeitsvoraussetzung noch geschlossen werden muss. Es ist auch möglich, dass beispielsweise der Benutzer auf eine fehlende Zielauswahl eines Ziels des fahrerlos durchführbaren Fahrmanövers hingewiesen wird, so dass der Fahrer zur Erfüllung dieser Zulässigkeitsvoraussetzung die Zielauswahl vornehmen kann.

Die Information kann an ein mit dem Kraftfahrzeug verbundenes Gerät, insbesondere ein Smartphone, übermittelt werden, so dass der Benutzer des Kraftfahrzeugs die Information von außerhalb des Kraftfahrzeugs erkennen kann. Zusätzlich oder alternativ ist es möglich, dass die betreffende Information auch an einer Anzeigeeinrichtung des Kraftfahrzeugs, beispielsweise an einer Bedieneinrichtung im Innenraum des Kraftfahrzeugs, angezeigt wird.

In einer bevorzugten Ausgestaltung der Erfindung kann vorgesehen sein, dass das Fahrmanöver ein automatisierter Einparkvorgang ist oder einen automatisierten Einparkvorgang umfasst. Neben der Durchführung eines Einparkvorgangs, also dem Bewegen des Kraftfahrzeugs auf einen freien Parkplatz und/oder in eine freie Parklücke, kann der automatisierte Einparkvorgang auch weitere Fahrvorgänge, beispielsweise ein Fahren des Kraftfahrzeugs zu einem freien Parkplatz beziehungsweise einer freien Parklücke, umfassen.

Für ein erfindungsgemäßes Kraftfahrzeug ist vorgesehen, dass es eine Recheneinrichtung umfasst, wobei die Recheneinrichtung zur Durchführung eines erfindungsgemäßen Verfahrens ausgebildet ist.

Sämtliche vorangehend in Bezug zu dem erfindungsgemäßen Verfahren beschriebenen Vorteile und Ausgestaltungen gelten entsprechend für das erfindungsgemäße Kraftfahrzeug.

Weitere Details und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: ein Ausführungsbeispiel eines erfindungsgemäßen Kraftfahrzeugs, und
- Fig. 2: eine Skizze zur Erläuterung eines Ausführungsbeispiels eines erfindungsgemäßen Verfahrens.

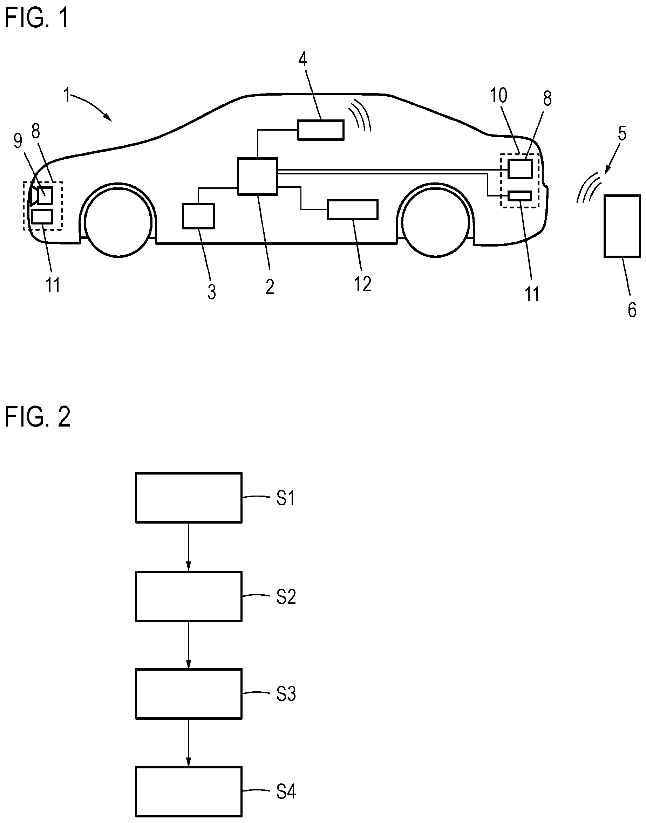

In Fig. 1 ist ein erfindungsgemäßes Kraftfahrzeug 1 dargestellt. Das Kraftfahrzeug 1 umfasst eine Recheneinrichtung 2, welche zur Durchführung wenigstens eines fahrerlos durchführbaren Fahrmanövers ausgebildet ist. Das Fahrmanöver kann dabei insbesondere ein automatisierter Parkvorgang sein oder einen automatisierten Parkvorgang umfassen.

Die Recheneinrichtung 2 ist mit einer Überwachungseinrichtung 3 verbunden, wobei die Überwachungseinrichtung 3 zum Erfassen der Vornahme einer Bedienhandlung durch einen Benutzer des Kraftfahrzeugs zum Starten der Durchführung des Fahrmanövers ausgebildet ist. Weiterhin ist die Recheneinrichtung 2 mit einer Kommunikationseinrichtung 4 des Kraftfahrzeugs verbunden. Die Kommunikationseinrichtung 4 kann über eine Kommunikationsverbindung 5 mit einem fahrzeugexternen, mobilen Gerät 6 kommunizieren. Die Recheneinrichtung 2 ist weiterhin mit einer Signaleinrichtung 8 verbunden, welche im vorliegenden Ausführungsbeispiel mehrere Fahrzeugleuchten umfasst. Als Fahrzeugleuchten werden die Scheinwerfer 9 sowie mehrere Signalleuchten 10, 11 verwendet. Die Signalleuchten 10 können beispielsweise als Bremslichter und die Signalleuchten 11 als Blinker ausgebildet sein. Zusätzlich oder alternativ dazu können auch weitere Scheinwerfer oder weitere Signalleuchten, beispielsweise ein Tagfahrlicht des Kraftfahrzeugs 1, verwendet werden. Weiterhin ist die Recheneinrichtung 2 mit einer zur akustischen Signalgabe ausgebildeten Signaleinrichtung 12 verbunden.

Die Recheneinrichtung 2 ist dazu ausgebildet, vor Durchführung des Fahrmanövers eine Erfüllung wenigstens einer Zulässigkeitsvoraussetzung zur Durchführung des fahrerlos durchführbaren Fahrmanövers zu überprüfen. Weiterhin kann vor Durchführung des Fahrmanövers eine Vornahme oder ein bisheriges Ausbleiben wenigstens einer zum Starten der Durchführung des Fahrmanövers erforderlichen Bedienhandlung eines sich außerhalb des Kraftfahrzeugs 1 befindlichen Benutzers des Kraftfahrzeugs 1 erfasst werden. Dabei wird die Vornahme der Bedienhandlung durch die mit der Recheneinrichtung 2 verbundene Überwachungseinrichtung 3 und/oder anhand einer Übermittlung einer die Durchführung der Bedienhandlung beschreibenden Information an die mit der Recheneinrichtung 2 verbundene Kommunikationseinrichtung 4 des Kraftfahrzeugs erfasst, wobei die Überwachungseinrichtung 3 bzw. die Kommunikationseinrichtung 4 die Vornahme der Bedienhandlung an die Recheneinrichtung 2 übermitteln. Ein Ausbleiben der Vornahme der Bedienhandlung kann entsprechend durch das Ausbleiben der Übermittlung einer Information an die Kommunikationseinrichtung 4 beziehungsweise durch das Ausbleiben einer Erfassung der Vornahme der Bedienhandlung durch die Überwachungseinrichtung 3 bzw. das Ausbleiben einer entsprechenden Übermittlung an die Recheneinheit 2 festgestellt werden.

Die Bedienhandlung kann dabei beispielsweise am Kraftfahrzeug selbst oder an dem mit der Kommunikationseinrichtung 4 über die Kommunikationsverbindung 5 verbundenen mobilen Gerät 6 vorgenommen werden. Bei dem mobilen Gerät 6 kann es sich beispielsweise um ein Smartphone handeln, welches eine App umfasst, an der eine Bedienhandlung zum Starten der Durchführung des Fahrmanövers erfolgen kann. Es ist auch möglich, dass es sich bei dem mobilen Gerät 6 um einen Fahrzeugschlüssel handelt, bei dem beispielsweise ein Aktivierungsbefehl für eine Fahrzeugverriegelung des Kraftfahrzeugs 1 gegeben werden kann, welche an das Kraftfahrzeug 1 übermittelt und dort von der Kommunikationseinrichtung 4 empfangen und an die Recheneinrichtung 2 übermittelt wird, so dass durch die Recheneinrichtung 2 die Vornahme der Bedienhandlung, also das Aktivieren der Fahrzeugverriegelung, erfasst werden kann. Es ist auch möglich, dass die Bedienhandlung ein Entfernen des Benutzers aus dem Umfeld des Kraftfahrzeugs ist, wobei ein derartiges Entfernen durch die Überwachungseinrichtung 3, welche beispielsweise eine Umfeldüberwachung des Kraftfahrzeugs 1 ist oder umfasst, festgestellt wird.

Weiterhin ist die Recheneinrichtung 2 des Kraftfahrzeugs 1 dazu ausgebildet, die Erfüllung wenigstens einer Zulässigkeitsvoraussetzung zur Durchführung des Fahrmanövers zu überprüfen. Dazu kann die Recheneinrichtung 2 beispielsweise mit weiteren Steuergeräten und/oder Sensoreinrichtungen des Kraftfahrzeugs 1 verbunden sein, um eine oder mehrere fahrzeuginterne Zulässigkeitsvoraussetzungen zu überprüfen. Die Zulässigkeitsvoraussetzungen können dabei beispielsweise die Betriebsbereitschaft einer zur Durchführung des Fahrmanövers verwendeten Sensoreinrichtung (nicht dargestellt) des Kraftfahrzeugs 1 umfassen und/oder vorsehen, dass alle Kraftfahrzeugtüren und/oder Kraftfahrzeugklappen des Kraftfahrzeugs 1 geschlossen sind.

Durch die Kommunikationseinrichtung 4 kann das Kraftfahrzeug 1 auch mit einer fahrzeugexternen Kommunikationseinrichtung, beispielsweise der Kommunikationseinrichtung einer Infrastruktur, kommunizieren, so dass durch die Recheneinrichtung 2 auch fahrzeugexterne Zulässigkeitsvoraussetzungen, beispielsweise das Vorhandensein eines freien Parkplatzes zur Durchführung eines Parkmanövers, überprüft werden können.

In Abhängigkeit der Erfüllung wenigstens einer Zulässigkeitsvoraussetzung und in Abhängigkeit der Vornahme oder des Ausbleibens der wenigstens einen Bedienhandlung wird durch die Recheneinrichtung 2 ein Zustand aus einer Gruppe von möglichen Zuständen bestimmt. Der Zustand bestimmt sich dabei insbesondere danach, ob die oder alle Zulässigkeitsvoraussetzungen erfüllt sind beziehungsweise welche Zulässigkeitsvoraussetzungen gegebenenfalls erfüllt oder nicht erfüllt sind und/oder danach, ob die Bedienhandlung zum Starten der Durchführung des Fahrmanövers vorgenommen wurde oder ob die Durchführung der Bedienhandlung noch aussteht.

In Abhängigkeit des von der Recheneinrichtung 2 bestimmten Zustands wird die zur Erzeugung einer optischen Signalgabe ausgebildete Signaleinrichtung 8 und/oder die zu einer akustischen Signalgabe ausgebildete Signaleinrichtung 12 von der Recheneinrichtung zur Erzeugung eines dem bestimmten Zustand zugeordneten Signals aus einer Gruppe von unterscheidbaren, außerhalb des Kraftfahrzeugs wahrnehmbaren und jeweils einem der möglichen Zustände zugeordneten Signalen angesteuert.

Dazu können beispielsweise die Scheinwerfer 9 und/oder die Signalleuchten 10, 11 zur Erzeugung von unterschiedlichen und unterscheidbaren Signalen angesteuert werden, wobei sich die Signale jeweils durch eine unterschiedliche Farbe und/oder eine unterschiedliche Blinkfrequenz und/oder ein unterschiedliches Betriebsmuster der Scheinwerfer beziehungsweise der Signalleuchte unterscheiden können. Zusätzlich oder alternativ dazu ist es zumindest bei einem Teil der Signale auch möglich, dass die Signaleinrichtung 12 zur Erzeugung eines dem Zustand zugeordneten Signals angesteuert wird. Die akustischen Signale können sich dabei jeweils durch eine unterschiedliche Tonhöhe, einen unterschiedlichen Klang und/oder einer unterschiedliche zeitliche Abfolge von Tönen und/oder Klängen unterscheiden. Eines oder mehrere jeweils einem der möglichen Zustände zugeordneten Signale können auch eine optische Signalkomponente und eine akustische Signalkomponente umfassen.

**In** Fig. 2 ist ein Blockdiagramm eines ersten Ausführungsbeispiels eines erfindungsgemäßen Verfahrens dargestellt. das Blockdiagramm umfasst dabei die Schritte:

| | |
|---|---|
| S1 | Überprüfung der Erfüllung wenigstens einer Zulässigkeitsvoraussetzung zur Durchführung des Fahrmanövers |
| S2 | Erfassen der Vornahme oder des bisherigen Ausbleibens wenigstens einer zum Starten der Durchführung des Fahrmanövers erforderlichen Bedienhandlung eines sich außerhalb des Kraftfahrzeugs 1 befindlichen Benutzers des Kraftfahrzeugs 1 |
| S3 | Bestimmung eines Zustandes aus einer Gruppe von möglichen Zuständen und |
| S4 | Ansteuerung wenigstens einer Signaleinrichtung 8, 12 zur Erzeugung eines dem bestimmten Zustand zugeordneten Signals aus einer Gruppe von unterscheidbaren Signalen |

In dem Verfahren werden beispielsweise die im Folgenden beschriebenen Zustände ermittelt und jeweils über ein unterschiedliches Signal einem sich außerhalb des Kraftfahrzeugs 1 befindlichen Benutzer kenntlich gemacht.

Dabei liegt ein erster Zustand vor, wenn alle Zulässigkeitsvoraussetzungen erfüllt sind und die Vornahme einer Bedienhandlung zum Starten der Durchführung des fahrerlosen Fahrmanövers noch aussteht. Dazu kann beispielsweise die Signaleinrichtung 8 derart angesteuert werden, dass eine prinzipielle Fahrbereitschaft des Kraftfahrzeugs 1 signalisiert wird. Dies kann beispielsweise über ein Pulsieren der Fahrzeugleuchten, beispielsweise der Schweinwerfer 10 und/oder der Signalleuchten 11, oder eine dem bestimmten Zustand zugeordnete Farbe des von den Fahrzeugleuchten emittierten Lichts kenntlich gemacht werden. Auch ein dauerhaftes Anbleiben einer oder mehrerer der Fahrzeugleuchten, beispielsweise der als Blinker ausgebildeten Signalleuchten 11, ist möglich. Ein sich außerhalb des Kraftfahrzeugs 1 befindlicher Benutzer kann aufgrund des dem Zustand zugeordneten Signals erkennen, dass das Kraftfahrzeug 1 aufgrund der Erfüllung der fahrzeuginternen und/oder fahrzeugexternen Zulässigkeitsvoraussetzungen in der Lage ist, die Durchführung des fahrerlosen Fahrzeugmanövers vorzunehmen, wenn der Benutzer durch die Vornahme der wenigstens einen Bedienhandlung das Starten der Durchführung des Fahrmanövers auslöst.

Dabei kann, wenn die Bedienhandlung zum Starten des fahrerlosen Fahrmanövers noch aussteht und bereits eine in der Recheneinrichtung 2 hinterlegte Zeitschwelle überschritten wurde, auf die Dringlichkeit der Vornahme der Bedienhandlung aufmerksam gemacht werden. Dazu kann beispielsweise eine Eigenschaft des Signals nach Überschreiten der Zeitschwelle unterscheidbar geändert werden. Beispielsweise kann das dadurch erfolgen, dass ein Pulsieren oder ein Blinken einer oder mehrerer Fahrzeugleuchten in einer schnelleren Frequenz erfolgt. Es ist auch möglich, dass zusätzlich zu einer optischen Signalgabe über die Signaleinrichtung 8 das Signal durch eine akustische Signalgabe durch die Signaleinrichtung 12 ergänzt wird. Dies ermöglicht es, den Benutzer darauf aufmerksam zu machen, dass die zur Durchführung des Fahrmanövers notwendige Bedienhandlung noch aussteht.

Dabei ist es möglich, dass mehrere, zeitlich versetzte Zeitschwellen verwendet werden, an denen jeweils das Signal unterscheidbar verändert wird, um die zunehmende Dringlichkeit der Durchführung der Bedienhandlung zum Starten des fahrerlosen Fahrmanövers anzuzeigen. Dazu kann beispielsweise eine Blinkfrequenz oder die Frequenz eines Pulsieren wenigstens einer der Fahrzeugleuchten bei Überschreiten einer weiteren Zeitschwelle jeweils weiter erhöht werden.

Die Bedienhandlung ist in diesem Ausführungsbeispiel die Aktivierung einer Fahrzeugverriegelung des Kraftfahrzeug 1 an einem Fahrzeugschlüssel oder einem als Smartphone ausgebildeten Mobilgerät 6. Auch ein Aktivieren der Fahrzeugverriegelung durch ein Entfernen des Benutzers aus einem Umfeld des Kraftahrzeugs ist dabei möglich. Eine Verriegelung des Kraftfahrzeugs 1 kann dabei über den Fahrzeugschlüssel beispielsweise direkt am Kraftahrzeug 1 durch ein Einführen des Fahrzeugschlüssels in einen Schließzylinder des Kraftfahrzeugs 1 erfolgen.

Zusätzlich oder alternativ dazu kann der Kraftfahrzeugschlüssel als ein Mobilgerät 6 über die Kommunikationsverbindung 5 mit dem Kraftfahrzeug verbunden sein, so dass die Aktivierung der Fahrzeugverriegelung über einen Taster am Fahrzeugschlüssel vorgenommen werden kann. Auch eine Aktivierung einer Fahrzeugverriegelung durch ein Entfernen des Benutzers aus einem Umfeld des Kraftfahrzeugs 1 ist möglich, wobei das Entfernen des Benutzers aus dem Umfeld des Kraftfahrzeugs beispielsweise 1 durch die Überwachungseinrichtung 3 des Kraftfahrzeugs 1 erfasst werden kann.

Ein zweiter Zustand liegt vor, wenn wenigstens eine Zulässigkeitsvoraussetzung durch die Recheneinrichtung 2 als nicht erfüllt ermittelt wird. Dies kann beispielsweise dadurch signalisiert werden, dass die als Blinker ausgebildeten Signalleuchten 11 des Kraftfahrzeugs 1 zum Erzeugen eines Warnblinkens angesteuert werden. Dies hat den Vorteil, dass der Benutzer weiß, dass das Kraftfahrzeug 1 nicht zur Durchführung des Fahrmanövers bereit ist und unabhängig von der Vornahme der Bedienhandlung durch den Benutzer das Fahrmanöver nicht durchführen wird.

Dabei ist insbesondere möglich, dass eine der nicht erfüllten Zulässigkeitsvoraussetzung zugeordnete Information an das beispielsweise als Smartphone ausgebildete Mobilgerät 6 gesendet wird, so dass der sich außerhalb des Kraftfahrzeugs 1 befindliche Benutzer über eine Möglichkeit zur Erfüllung der Zulässigkeitsvoraussetzung informiert werden kann. Beispielsweise kann dies der Fall sein, wenn die Zulässigkeitsvoraussetzung durch das Schließen einer Kraftfahrzeugtür oder einer Kraftfahrzeugklappe erfüllt werden kann und/oder wenn zur Erfüllung der Zulässigkeitsvoraussetzung noch ein Zielort des Fahrmanövers eingegeben werden muss. Zusätzlich oder alternativ zu einer Übermittlung an ein Mobilgerät 6 des Benutzers kann auch eine Anzeige der Information an einer Anzeigeeinrichtung des Kraftfahrzeugs, beispielsweise einer Bedieneinrichtung im Inneren des Kraftfahrzeugs 1, erfolgen.

Es ist möglich, dass bei mehreren Zulässigkeitsvoraussetzungen jeweils eine oder mehrere nicht erfüllte Zulässigkeitsvoraussetzungen in einem Zustand zusammengefasst werden bzw. das verschiedene nicht erfüllte Zulässigkeitsvoraussetzungen jeweils einem eigenen Zustand zugeordnet werden, so dass diese jeweils auch vom Benutzer des Kraftfahrzeugs 1 aufgrund der jeweils unterscheidbar durch die Signaleinrichtung 8 und/oder 12 erzeugten Signale unterschieden werden können.

Ein dritter Zustand, welcher dem sich außerhalb des Kraftfahrzeugs 1 befindlichen Benutzer kenntlich gemacht werden kann, betrifft den Fall, in dem die wenigstens eine Zulässigkeitsvoraussetzung beziehungsweise alle Zulässigkeitsvoraussetzungen, welche von der Recheneinrichtung 2 überprüft werden, erfüllt sind und die zum Starten der Durchführung des Fahrmanövers erforderliche Bedienhandlung vom Benutzer vorgenommen worden ist, also mit anderen Worten erfolgreich der Aktivierungstrigger zur Durchführung des fahrerlosen Fahrmanövers gegeben wurde.

Dazu können beispielsweise die Fahrzeugleuchten in einem diesem Zustand zugewiesenen Betätigungsmusters, beispielsweise durch ein Blinken der Blinkerleuchten 11 in einer bestimmten Farbe und/oder Frequenz, angesteuert werden, so dass der Benutzer durch dieses beispielhafte Bestätigungsblinken erkennen kann, dass die zur Durchführung des Fahrmanövers erforderlichen Voraussetzung alle erfüllt sind und dass auch die zum Starten der Durchführung des Fahrmanövers erforderliche Bedienhandlung erfolgreich durchgeführt wurde, das heißt, dass die entsprechende Bedienhandlung durch die Überwachungseinrichtung 3 erfasst worden ist beziehungsweise dass eine die Vornahme der Bedienhandlung beschreibende Information an die Kommunikationseinrichtung 4 des Kraftfahrzeugs 1 übermittelt worden ist.

Es ist möglich, dass das Kraftfahrzeug 1 den Fahrvorgang nicht unmittelbar nach der Vornahme der Bedienhandlung beginnt, sondern dass gegebenenfalls ein Start der Durchführung des Fahrmanövers noch aufgrund einer vom Kraftfahrzeug 1 erfassten Verkehrssituation oder Ähnlichem hinausgezögert wird.

## Patentansprüche

1. Verfahren zum Betrieb eines Kraftfahrzeugs (1), wobei das Kraftfahrzeug (1) zur Durchführung wenigstens eines fahrerlos durchführbaren Fahrmanövers ausgebildet ist, wobei vor Durchführung des Fahrmanövers durch eine Recheneinrichtung (2) des Kraftfahrzeugs (1)
- eine Erfüllung wenigstens einer Zulässigkeitsvoraussetzung zur Durchführung des Fahrmanövers überprüft wird,
- eine Vornahme oder ein bisheriges Ausbleiben wenigstens einer zum Starten der Durchführung des Fahrmanövers erforderlichen Bedienhandlung eines sich außerhalb des Kraftfahrzeugs (1) befindlichen Benutzers des Kraftfahrzeugs (1) erfasst wird, wobei die Vornahme der Bedienhandlung durch eine mit der Recheneinrichtung (2) verbundene Überwachungseinrichtung (3) und/oder anhand einer Übermittlung einer die Vornahme der Bedienhandlung beschreibenden Information an eine mit der Recheneinrichtung (2) verbundene Kommunikationseinrichtung (4) des Kraftfahrzeugs (1) erfassbar ist,
- in Abhängigkeit der Erfüllung oder der Nichterfüllung der Zulässigkeitsvoraussetzung und in Abhängigkeit der bereits erfolgten Vornahme oder des bisherigen Ausbleibens der Bedienhandlung ein Zustand aus einer Gruppe von möglichen Zuständen bestimmt wird, und
- wenigstens eine Signaleinrichtung (8, 12) des Kraftfahrzeugs (1) zum Erzeugen eines dem bestimmten Zustand zugeordneten Signals aus einer Gruppe von unterscheidbaren, außerhalb des Kraftfahrzeugs (1) wahrnehmbaren und jeweils einem der möglichen Zustände zugeordneten Signalen angesteuert wird.

2. Verfahren nach Anspruch 1,
**dadurch gekennzeichnet,**
**dass** als Signaleinrichtung (8) wenigstens eine Fahrzeugleuchte, insbesondere ein Scheinwerfer (9) und/oder wenigstens eine Signalleuchte (10, 11), insbesondere eine Blinkerleuchte, ein Tagfahrlicht und/oder ein Bremslicht, verwendet wird.

3. Verfahren nach Anspruch 2,
**dadurch gekennzeichnet,**
**dass** zumindest ein Teil der Signale der Gruppe von Signalen jeweils eine unterschiedliche Farbe und/oder eine unterschiedliche Blinkfrequenz und/oder ein unterschiedliches Betriebsmuster der wenigstens einen Fahrzeugleuchte umfassen.

4. Verfahren nach einem der vorangehenden Ansprüche,
**dadurch gekennzeichnet,**
**dass** eine zur akustischen Signalgabe ausgebildete Signaleinrichtung (12) verwendet wird, wobei zumindest ein Teil der Signale der Gruppe von Signalen jeweils eine unterschiedliche Tonhöhe, einen unterschiedlichen Klang und/oder eine unterschiedliche zeitliche Abfolge von Tönen und/oder Klängen umfassen.

5. Verfahren nach einem der vorangehenden Ansprüche,
**dadurch gekennzeichnet,**
**dass** die Bedienhandlung des Benutzers eine am Kraftfahrzeug (1) und/oder in einem Umfeld des Kraftfahrzeugs (1) und/oder an einem über eine Kommunikationsverbindung (5) mit der Kommunikationseinrichtung (4) des Kraftfahrzeugs (1) verbundenen Gerät (6) durchzuführende Bedienhandlung ist.

6. Verfahren nach einem der vorangehenden Ansprüche,
**dadurch gekennzeichnet,**
**dass** die Bedienhandlung die Aktivierung einer Fahrzeugverriegelung an einem Fahrzeugschlüssel oder einem Mobilgerät ist oder umfasst und/oder dass die Bedienhandlung ein Entfernen des Benutzers aus einem Umfeld des Kraftfahrzeugs (1) ist oder umfasst.

7. Verfahren nach einem der vorangehenden Ansprüche,
**dadurch gekennzeichnet,**
**dass** bei Ausbleiben der Bedienhandlung über wenigstens eine in der Recheneinrichtung (2) hinterlegte Zeitschwelle hinaus das dem aktuellen Zustand zugeordnete Signal unterscheidbar verändert wird.

8. Verfahren nach einem der vorangehenden Ansprüche,
**dadurch gekennzeichnet,**
**dass** als Zulässigkeitsvoraussetzung eine kraftfahrzeuginterne Zulässigkeitsvoraussetzung und/oder eine kraftfahrzeugexterne Zulässigkeitsvoraussetzung, insbesondere durch Kommunikation mit einer Infrastruktur, überprüft wird.

9. Verfahren nach einem der vorangehenden Ansprüche,
**dadurch gekennzeichnet,**
**dass** bei Nichterfüllung der wenigstens einen Zulässigkeitsvoraussetzung eine die Zulässigkeitsvoraussetzung betreffende Information an einer Anzeigeeinrichtung des Kraftfahrzeugs (1) angezeigt und/oder an ein über eine Kommunikationsverbindung (5) mit der Kommunikationseinrichtung (4) des Kraftfahrzeugs (1) verbundenes Gerät (6) übermittelt wird.

10. Verfahren nach einem der vorangehenden Ansprüche,
**dadurch gekennzeichnet,**
**dass** das Fahrmanöver ein automatisierter Einparkvorgang ist oder einen automatisierten Einparkvorgang umfasst.

11. Kraftfahrzeug umfassend eine Recheneinrichtung (2), wobei die Recheneinrichtung (2) zur Durchführung eines Verfahrens nach einem der vorangehenden Ansprüche ausgebildet ist.

## Claims

1. Method for operating a motor vehicle (1), wherein the motor vehicle (1) is configured to perform at least one driverless performable driving maneuver, wherein before performing the driving maneuver a computer apparatus (2) of the motor vehicle (1)
- checks whether at least one permissibility requirement for performing the driving maneuver has been met,
- detects a performance or a previous failure to perform at least one operating action of a user of the motor vehicle (1) located outside of the motor vehicle (1), which is required to start the execution of the driving maneuver, wherein performing the operating action can be detected by a monitoring apparatus (3) connected to the computer apparatus (2) and/or by means of transmitting information describing the performance of the operating action to a communication apparatus (4) of the motor vehicle (1) connected to the computer apparatus (2),
- determines as a function of meeting or not meeting the permissibility requirement and as function of the already performed or previous failure to perform the operating action a state from a group of possible states, and
- activates at least one signaling apparatus (8, 12) of the motor vehicle (1) to generate a signal associated with the determined state from a group of distinguishable signals which can be perceived outside the motor vehicle (1) and each associated with one of the possible states.

2. Method according to claim 1,
**characterized in that**
as the signaling apparatus (8) at least one vehicle light, in particular a headlight (9) and/or at least one signaling light (10, 11), in particular an indicator light, a daytime light and/or a brake light, is used.

3. Method according to claim 2,
**characterized in that**
at least a portion of the signals of the group of signals each comprise a different color and/or a different flashing frequency and/or a different operating pattern of the at least one vehicle light.

4. Method according to any one of the preceding claims,
**characterized in that**
a signaling apparatus (12) configured for acoustic signaling is used, wherein at least a portion of the signals of the group of signals each comprise a different pitch, a different sound and/or a different time sequence of tones and/or sounds.

5. Method according to any one of the preceding claims,
**characterized in that**
the user's operating action is an operating action to be performed on the motor vehicle (1) and/or in the environment of the motor vehicle (1) and/or on an appliance (6) connected to the communication apparatus (4) of the motor vehicle (1) via a communication link (5).

6. Method according to any one of the preceding claims,
**characterized in that**
the operating action is or comprises activating the vehicle lock on a vehicle key or a mobile appliance and/or **in that** the operating action is or comprises removing the user from the environment of the motor vehicle (1).

7. Method according to any one of the preceding claims,
**characterized in that**
in the absence of the operating action, the signal associated with the current state is changed in a distinguishable manner beyond at least one time threshold stored in the computer apparatus (2).

8. Method according to any one of the preceding claims,
**characterized in that**
a vehicle-internal permissibility requirement and/or a vehicle-external permissibility requirement is checked as a permissibility requirement, in particular by communication with an infrastructure.

9. Method according to any one of the preceding claims,
**characterized in that**
if the at least one permissibility requirement is not met, information relating to the permissibility requirement is displayed on a display apparatus of the motor vehicle (1) and/or is transmitted to an appliance (6) connected to the communication apparatus (4) of the motor vehicle (1) via a communication link (5).

10. Method according to any one of the preceding claims,
**characterized in that**
the driving maneuver is an automated parting process or comprises an automated parking process.

11. Motor vehicle comprising a computer apparatus (2), wherein the computer apparatus (2) is configured to perform a method according to any one of the preceding claims.

## Revendications

1. Procédé de fonctionnement d'un véhicule automobile (1), dans lequel le véhicule automobile (1) est configuré pour l'exécution d'au moins une manœuvre de conduite pouvant être exécutée sans conducteur, dans lequel, avant l'exécution de la manœuvre de conduite par un dispositif informatique (2) du véhicule automobile (1),
- une conformité d'au moins une condition préalable d'admissibilité pour l'exécution de la manœuvre de conduite est vérifiée,
- une réalisation ou une absence préalable d'au moins une action de commande nécessaire à l'initiation de l'exécution de la manœuvre de conduite d'un utilisateur se trouvant à l'extérieur du véhicule automobile (1) est détectée, dans lequel la réalisation de l'action de commande peut être détectée par un dispositif de surveillance (3) relié au dispositif informatique (2) et/ou à l'aide d'une transmission d'une information décrivant la réalisation de l'action de commande à un dispositif de communication (4) relié au dispositif informatique (2) du véhicule automobile (1),
- en fonction de la conformité ou de la non conformité de la condition préalable d'admissibilité et en fonction de la réalisation déjà effectuée ou de l'absence préalable de l'action de commande, un état est déterminé à partir d'un groupe d'états possibles et
- au moins un dispositif de signalisation (8, 12) du véhicule automobile (1) est commandé pour la génération d'un signal associé à l'état déterminé à partir d'un groupe de signaux pouvant être distingués, perceptibles à l'extérieur du véhicule automobile (1) et associés respectivement à l'un des états possibles.

2. Procédé selon la revendication 1,
**caractérisé en ce que**
au moins un feu de véhicule, en particulier un phare (9) et/ou au moins un feu de signalisation (10, 11), en particulier un feu clignotant, un feu de circulation diurne et/ou un feu stop est utilisé comme dispositif de signalisation (8).

3. Procédé selon la revendication 2,
**caractérisé en ce que**
au moins une partie des signaux du groupe de signaux comprend respectivement une couleur différente et/ou une fréquence de clignotement différente et/ou un modèle de fonctionnement différent de l'au moins un feu de véhicule.

4. Procédé selon l'une quelconque des revendications précédentes,
**caractérisé en ce que**
un dispositif de signalisation (12) configuré pour la fourniture de signal acoustique est utilisé, dans lequel au moins une partie des signaux du groupe de signaux comprend respectivement une hauteur de son différente, une sonorité différente et/ou une suite de sons et/ou de sonorités temporelle différente.

5. Procédé selon l'une quelconque des revendications précédentes,
**caractérisé en ce que**
l'action de commande de l'utilisateur est une action de commande à exécuter au niveau du véhicule automobile (1) et/ou dans un environnement du véhicule automobile (1) et/ou au niveau d'un appareil (6) relié au dispositif de communication (4) du véhicule automobile (1) par le biais d'une liaison de communication (5).

6. Procédé selon l'une quelconque des revendications précédentes,
**caractérisé en ce que**
l'action de commande est ou comprend l'activation d'un verrouillage de véhicule au niveau d'une clé de véhicule ou un appareil mobile et/ou **en ce que** l'action de commande est ou comprend une suppression de l'utilisateur d'un environnement du véhicule automobile (1).

7. Procédé selon l'une quelconque des revendications précédentes,
**caractérisé en ce que**
le signal associé à l'état actuel est modifié de manière à pouvoir être distingué en cas d'absence de l'action de commande au-delà d'au moins un seuil de temps enregistré dans le dispositif informatique (2).

8. Procédé selon l'une quelconque des revendications précédentes,
**caractérisé en ce que**
une condition préalable d'admissibilité interne au véhicule automobile et/ou une condition préalable d'admissibilité externe au véhicule automobile est vérifiée comme condition préalable d'admissibilité, en particulier par communication avec une infrastructure.

9. Procédé selon l'une quelconque des revendications précédentes,
**caractérisé en ce que**
en cas de non conformité de l'au moins une condition préalable d'admissibilité, une information concernant la condition préalable d'admissibilité est affichée sur un dispositif d'affichage du véhicule automobile (1) et/ou est transmise à un appareil (6) relié par le biais d'une liaison de communication (5) au dispositif de communication (4) du véhicule automobile (1).

10. Procédé selon l'une quelconque des revendications précédentes,
**caractérisé en ce que**
la manœuvre de conduite est un processus de stationnement automatisé ou comprend un processus de stationnement automatisé.

11. Véhicule automobile comprenant un dispositif informatique (2), dans lequel le dispositif informatique (2) est configuré pour l'exécution d'un procédé selon l'une quelconque des revendications précédentes.
